(19) Europäisches Patentamt
European Patent Office
Office européen des brevets

(11) Publication number: **0 206 536 A2**

(12) **EUROPEAN PATENT APPLICATION**

(21) Application number: **86303970.7**

(51) Int. Cl.⁴: **C 08 K 7/10**, C 08 J 5/24

(22) Date of filing: **23.05.86**

(30) Priority: **25.05.85 JP 111340/85**

(43) Date of publication of application: **30.12.86 Bulletin 86/52**

(84) Designated Contracting States: **DE FR GB**

(71) Applicant: **UBE INDUSTRIES LIMITED, 12-32, 1-chome, Nishihoncho, Ube-shi, Yamaguchi-ken (JP)**

(72) Inventor: **Yamamura, Takemi Ube Research Lab., Ube Industries, Ltd. 1978-5, Oaza Kogushi, Ube-shi Yamaguchi-ken (JP)**
Inventor: **Tokuse, Masahiro Ube Research Lab., Ube Industries, Ltd. 1978-5, Oaza Kogushi, Ube-shi Yamaguchi-ken (JP)**
Inventor: **Furushima, Teruhisa Ube Research Lab., Ube Industries, Ltd. 1978-5, Oaza Kogushi, Ube-shi Yamaguchi-ken (JP)**

(74) Representative: **Myerscough, Philip Boyd et al, J.A.Kemp & Co. 14, South Square Gray's Inn, London, WC1R 5EU (GB)**

(54) **Inorganic fiber-reinforced plastic composite material.**

(57) An inorganic fiber-reinforced plastic composite material comprises a plastics matrix and from 10 to 70% by volume of the composite material of inorganic fibers as a reinforcing material, said inorganic fibers containing silicon, either titanium or zirconium, carbon and oxygen and being composed of

(1) an amorphous material consisting substantially of Si, M, C and O, in which M represents Ti or Zr;

(2) an aggregate consisting substantially of ultrafine crystalline particles of beta-SiC, MC, a solid solution of beta-SiC and MC and $MC_{1-x}$ having a particle diameter of not more than 400 Å, and amorphous $SiO_2$ and $MO_2$, in which M is as defined above and x is a number represented by $0 < x < 1$; or

(3) mixture of the amorphous material (1) and the aggregate (2).

EP 0 206 536 A2

INORGANIC FIBER-REINFORCED PLASTIC COMPOSITE MATERIAL

This invention relates to an inorganic fiber-reinforced plastic composite material having excellent mechanical properties composed of a plastic matrix and inorganic fibers composed mainly of silicon, either titanium or zirconium, carbon and oxygen.

Surface-treated carbon fibers have widely been used as reinforcing fibers for plastics such as epoxy resins, modified epoxy resins, polyester resins and polyimide resins. For this purpose, the carbon fibers require surface treatment because of their poor wetting property with the resins. Plastic composite materials obtained by reinforcing such plastics with the surface-treated carbon fibers have an interlayer shear strength of about 8 $kg/mm^2$ at the highest and a tensile strength, in a direction perpendicular to the fibers, of about 4.5 $kg/mm^2$. This means that the strength of bonding between the fibers and the resin is weak, and the fibers are liable to drop off from the resin. Accordingly, after long-term use, the fibers will be exfoliated from the resin. Furthermore, since the flexural impact value of the composite materials is low, the composite materials may undergo breakage by instantaneous impact.

Japanese Laid-Open Patent Publication No. 14687/1977 discloses that silicon carbide fibers obtained by spinning an organosilicon polymer called polycarbosilane, rendering the resulting fibers infusible, and then firing the fibers can be used as a reinforcing material without surface-treatment. Even when these silicon carbide fibers are used, the resulting composite material has an interlayer shear strength of about 8.7 $kg/mm^2$ although having a tensile strength and a flexural strength, in a

direction perpendicular to the fibers, of about 6.5 $kg/mm^2$ and about 9 $kg/mm^2$, respectively, which are higher than in the case of using the carbon fibers as a reinforcing material.

For the foregoing reasons, the strength of bonding between the resin and the fibers is still insufficient, and on long-term use, the resin and the fibers are liable to separate from each other. Such composite materials are therefore limited in utility.

It is an object of this invention to solve the aforesaid problems, and provide a composite material having excellent mechanical properties.

Another object of this invention is to provide a composite material having excellent bond strength between a resin as a matrix and inorganic fibers as a reinforcing material.

Still another object of this invention is to provide a composite material in which the matrix has good compatibility with the inorganic fibers, and the efficiency of reinforcement by the inorganic fibers is high.

Yet another object of this invention is to provide a composite material whose fatigue strength decreases only to a small extent.

A further object of this invention is to provide a composite material which is suitable for mass production.

An additional object of this invention is to provide an inorganic fiber reinforced plastic composite material having an interlayer shear strength of at least about 10 $kg/mm^2$, a tensile strength, in a direction perpendicular to the fibers, of at least about 7 $kg/mm^2$, a flexural strength, in a direction perpendicular to the fibers, of at least about 10 $kg/mm^2$, and a flexural impact value of at least 200 $kg\text{-}cm/cm^2$.

According to this invention, there is provided an inorganic fiber-reinforced plastic composite material

comprising a plastic as a matrix and inorganic fibers as a reinforcing material, said inorganic fibers containing silicon, either titanium or zirconium, carbon and oxygen and being composed of

(1) an amorphous material consisting substantially of Si, M, C and O, or

(2) an aggregate consisting substantially of ultrafine crystalline particles of beta-SiC, MC, a solid solution of beta-SiC and MC and $MC_{1-x}$ having a particle diameter of not more than 500 Å, and amorphous $SiO_2$ and $MO_2$, in which M represents Ti or Zr, and x is a number represented by $0<x<1$, or

(3) a mixture of the amorphous material (1) and the aggregate (2),

the amount of the inorganic fibers being 10 to 70 % by volume of the composite material.

The inorganic fiber-reinforced plastic composite material of this invention is characterized by having

(a) an interlayer shear strength of at least 10 $kg/mm^2$,

(b) a tensile strength, in a direction perpendicular to the fibers, of at least 7 $kg/mm^2$,

(c) a flexural strength, in a direction perpendicular to the fibers, of at least 10 $kg/mm^2$, and

(d) a flexural impact value of at least 200 $kg\text{-}cm/cm^2$.

The inorganic fibers used in this invention are described in European Patents Nos. 30145 and 37209. These inorganic fibers composed substantially of Si, Ti, C and O, or Si, Zr, C and O can be produced by a process which comprises a first step of mixing

(1) a polycarbosilane having a number average molecular weight of about 500 to 10,000 and containing a main-chain skeleton composed mainly

of structural units of the formula $-(Si-CH_2)-$ wherein the silicon atom substantially has two side-chain groups selected from the class consisting of hydogen atoms, lower alkyl groups and phenyl groups, and

(2) a polymetallosiloxane having a number average molecular weight of about 500 to 10,000 and containing a main-chain skeleton composed of metalloxane bond units $-(M-O)-$ wherein M represents titanium or zirconium and siloxane bond units $-(Si-O)-$, the ratio of the total number of the metalloxane bond units to that of the siloxane bond units being from 30:1 to 1:30, most of the silicon atoms in the siloxane bond units having 1 or 2 side-chain groups selected from the group consisting of lower alkyl and phenyl groups, and most of the metal atoms in the metalloxane bond units having 1 or 2 lower alkoxy groups as a side-chain group,

in such proportions that the ratio of the total number of the structural units $-(Si-CH_2)-$ of the polycarbosilane to the total number of the $-(M-O)-$ bond units and the $-(Si-O)-$ bond units is from 100:1 to 1:100, and heating the mixture in an organic solvent in an atmosphere inert to the reaction to bond at least some of the silicon atoms of the polycarbosilane to at least some of the silicon atoms and/or metal atoms of the polymetallosiloxane through oxygen atoms and to form an organic metallic polymer having a number average molecular weight of about 1,000 to 50,000 and composed of a crosslinked polycarbosilane portion and polymetallosiloxane portion; a second step of preparing a spinning dope of the polymer and spinning the dope; a third step of rendering the spun fibers infusible under tension or under no tension; and a fourth step of calcining the infusible fibers at a temperature of 800 to 1800°C in vacuum or in an inert gaseous atmosphere.

Alternatively, the inorganic fibers consisting substantially of Si, Ti, C and O or of Si, Zr, C and O can be produced by a process which comprises

a first step of mixing a polycarbosilane having a number average molecular weight of 200 to 10,000 and mainly containing a main-chain skeleton represented by the general formula

$$\left( \overset{R}{\underset{H}{Si}} - CH_2 \right)$$

wherein R represents a hydrogen atom, a lower alkyl group or a phenyl group,

and an organic metal compound represented by the general formula

$$MX_4$$

wherein M represents Ti or Zr and X represents an alkoxy group containing 1 to 20 carbon toms, a phenoxy group, or an acetylacetoxy group,

in such mixing ratios that the ratio of the total number of the structural units $(Si-CH_2)$ to the total number of the structural units $(M-O)$ of the organic metal compound is in the range of from 2:1 to 200:1, and reacting the mixture under heat in an atmosphere inert to the reaction to bond at least some of the silicon atoms of the polycarbosilane to the metal atoms of the organic metal compound through oxygen atoms and form an organic metallic polymer having a number average molecular weight of about 700 to 100,000;

a second step of preparing a spinning dope of the organic metallic polymer and spinning it;

a third step of rendering the spun fibers insoluble under tension or under no tension; and

a fourth step of calcining the infusible fibers at a temperature of 800 to 1800°C in an atmosphere of an inert gas.

The inorganic fibers contain 30 to 60% by weight of Si, 0.5 to 35% by weight, preferably 1 to 10% by weight, of Ti or Zr, 25 to 40% by weight of C, and 0.01 to 30% by weight of O in terms of elemental composition.

The inorganic fibers may be used in various forms, for example in the form of a blend of these fibers arranged monoaxially or multiaxially, a fabric of the plain, satin, imitation gauze, twill or leno weave, a helically woven fabric, a three-dimensionally woven fabric, or chopped fibers.

Examples of the plastic that can be used as a matrix in this invention include epoxy resins, modified epoxy resins, polyester resins, phenolic resins, polyimide resins, polyurethane resins, polyamide resins, polycarbonate resins, silicone resins, fluorine resins, polyphenylene sulfide, polybutylene terephthalate, ultrahigh-molecular-weight polyethylene, polypropylene, modified polyphenylene oxide, polystyrene, ABS resin and vinyl chloride resins.

The plastic composite material of this invention may be produced by ordinary methods of producing fiber-reinforced plastic composite materials, such as (1) the hand layup metod, (2) the matched metal die method, (3) the break away method, (4) the filament winding method, (5) the hot press method, (6) the autoclave method, and (7) the continuous pulling method.

(1) According to the hand lay up method, the composite material can be produced by cutting the inorganic fibers, laying them up on a mold, coating the plastic containing a catalyst on the laid inorganic fibers by means of a brush or roller, allowing it to cure spontaneously, and then removing the mold.

(2) According to the matched metal die method, the composite material can be produced by impregnating the inorganic fibers with a mixture of the plastic, a curing agent, a filler and a thickening agent, and molding the impregnated fibers under heat and pressure. Depending upon

the form of the material during molding, either a sheet molding compound method or a bulk molding compound method can be selected.

(3) According to the break away method, the composite material can be produced by impregnating a sheet of the inorganic fibers with the plastics, pre-curing the impregnated sheet to form a prepreg, winding the prepreg about a tapered mandrel, curing the prepreg and pulling out the cured sheet from the spindle. A hollow article having a complex configuration is produced by this method.

(4) According to the filament winding method, the composite material can be produced by impregnating the inorganic fibers with a thermosetting resin such as an epoxy resin or an unsaturated polyester resin, winding the impregnated inorganic fibers about a mandrel, curing the resin, and then removing the mold. As required, either a wet method or a dry method (using a prepreg tape) can be selected.

(5) According to the hot press method, a composite material in the form of a plate can be produced by stacking prepreg sheets in one direction or at any desired angle, and compressing the stacked assembly under heat and pressure.

(6) According to the autoclave method, the composite material can be produced by stacking prepregs in a mold, enveloping them with a special rubber, placing the enveloped material in a high-pressure kettle under vacuum, and heating it under pressure to effect curing. This method is suitable for forming articles of a complex shape.

(7) According to the continuous pulling method, a long strip of composite material can be produced by separately feeding the inorganic fibers and the plastics into a molding machine, mixing them just in front of the mold, and passing the molded mixture through a heating furnace.

The tensile strength ($\sigma_C$) of the composite

material produced from the inorganic fibers and the plastic matrix is defined by the following equation.

$$\sigma_c = \sigma_f V_f + \sigma_M V_M$$

wherein

$\sigma_c$: the tensile strength of the composite material,

$\sigma_f$: the tensile strength of the inorganic fibers,

$\sigma_M$: the tensile strength of the plastic matrix,

$V_f$: the volume percent of the inorganic fibers,

$V_M$: the volume percent of the plastic matrix.

As shown by the above equation, the strength of the composite material increases with increasing volume percent of the inorganic fibers in the composite material. Hence, to produce a composite material having high strength, it is necessary to increase the volume percent of the inorganic fibers. If, however, the volume percent of the inorganic fibes exceeds 70%, the amount of the plastic matrix is small and the interstices among the fibers cannot be fully filled with the plastic matrix. The resulting composite material cannot have the strength specified in this invention. If, on the other hand, the number of the fibers is decreased, the hardness of the composite material represented by the tensile strength is reduced as indicated by the above equation, and to produce a practical composite material, at least 10% of the inorganic fibers must be combined. Accordingly, in the production of the inorganic fiber-reinforced plastic composite material of this invention, best results can be obtained when the volume proportion of the inorganic fibers to be combined is adjusted to 10 to 70%, preferably to 30 to 60%.

Since the plastic composite material of this invention has excellent mechanical properties, it can be applied to uses for which conventional plastic composite materials cannot be used.

The mechanical properties of the composite material of this invention vary depending upon the type of the plastic forming the matrix, and are, for example, as shown in the following table.

| Plastic constituting the matrix | Interlayer shear strength ($kg/mm^2$) | Tensile strength in a direction perpendicular to the fibers ($kg/mm^2$) |
|---|---|---|
| Epoxy resin | at least 10 | at least 7 |
| Modified epoxy resin | at least 14 | at least 10 |
| Unsaturated polyester resin | at least 10 | at least 7 |
| Polyimide resin | at least 10 | at least 7 |

| Plastic constituting the matrix | Flexural strength in a direction perpendicular to the fibers ($kg/mm^2$) | Flexural impact value ($kg\text{-}cm/cm^2$) |
|---|---|---|
| Epoxy resin | at least 10 | at least 200 |
| Modified epoxy resin | at least 13 | at least 250 |
| Unsaturated polyester resin | at least 10 | at least 200 |
| Polyimide resin | at least 10 | at least 200 |

The various mechanical properties of the composite material of this invention are measured by the following methods.

(a) Interlayer shear strength

A composite material sample having inorganic fibers (100x12x2 mm) oriented monoaxially was placed on

two pins each having a length of 20 mm and a radius of curvature of 6 mm, and compressed by a presser having a radius of curvature of 3.5 mmR at its end by the so-called three-point bending method. The interlayer shear stress ($kg/mm^2$) is measured and defined as the interlayer shear strength.

(b) Tensile strength and tensile modulus in a direction perpendicular to the fibers

A fiber reinforced composite material having a thickness of 2 mm in which the fibers were aligned monoaxially was produced. A test piece (19 x 127 mm) was taken from it so that the axial direction of the test piece crossed the direction of the fiber alignment at right angles. The thickness of the test piece was 2 mm. A curvature of 125 mmR was provided in the central part in the thickness direction and the central part was finished in a thickness of about 1 mm. The tensile test was carried out at a stretching speed of 1 mm/min. The tensile strength was expressed in $kg/mm^2$, and the tensile modulus, in $tons/mm^2$).

(c) Flexural strength and flexural modulus in a direction perpendicular to the fibers

A fiber reinforced composite material having a thickness of 2 mm in which the fibers were aligned monoaxially was produced. A test piece (12.7x85 mm) was taken from it so that the axial direction of the test piece crossed the direction of the fiber alignment at right angles. The thickness of the test piece was 2 mm. A curvature of 125 mmR was provided in the central part in the thickness direction and the central part was finished in a thickness of about 1 mm. The test piece was subjected to the 3-point bending method. The flexural strength was expressed in $kg/mm^2$, and the flexural modulus, in $tons/mm^2$.

The interlayer shear strength, the tensile strength in a direction perpendicular to the fibers and the flexural strength in a direction perpendicular to the

fibers are measures of the strength of bonding between the matrix and the fibers

(d) Tensile strength and tensile modulus

A fiber reinforced composite material having a thickness of 2 mm in which the fibers were aligned monoaxially was produced. A test piece (12.7x230 mm) was taken from it so that the axial direction of the test piece is the same as the direction of the fiber alignment. The thickness of the test piece was 2 mm. A curvature of 125 mmR was provided in the central part in the thickness direction and the central part was finished in a thickness of about 1 mm. The tensile test was carried out at a stretching speed of 1 mm/min. The tensile strength was expressed in $kg/mm^2$, and the tensile modulus, in $tons/mm^2$ .

(e) Flexural strength and flexural modulus

A fiber reinforced composite material having a thickness of 2 mm in which the fibers were aligned monoaxially was produced. A test piece (12.7x85 mm) was taken from it so that the axial direction of the test piece is the same as the direction of the fiber alignment. The thickness of the test piece was 2 mm. A curvature of 125 mmR was provided in the central part in the thickness direction and the central part was finished in a thickness of about 1 mm. The test piece was subjected to the 3-point bending method. The flexural strength was expressed in $kg/mm^2$, and the flexural modulus, in $tons/mm^2$.

(f) Flexural impact value

The flexural impact value was measured by the Charpy testing method (JIS K 7111) by three-point bending.

The flexural impact value is a measure of the strength of bonding between the plastics and the fibers, particularly the strength of resistance to instantaneous impact. If the flexural impact value is low, the fibers and the resin are liable to separate from each other and the composite material is liable to break by instantaneous impact.

Since the inorganic fibers used in the composite material of this invention has excellent wettability with the plastic, it is not particularly necessary to treat the surface of the inorganic fibers. Furthermore, since the strength of bonding between the inorganic fibers and the plastic is excellent, the present invention provides a composite material having excellent interlayer shear strength, tensile strength and flexural strength in a direction perpendicular to the fibers, and flexural impact value. The inorganic fibers used in this invention has an excellent reinforcing efficiency in plastic composite materials, and the resulting reinforced plastic composite materials have various excellent mechanical properties, and can withstand use over a long period of time. Hence, they can be applied to fields for which conventional plastic composite materials cannot be used. For example, these composite materials find applications in fields which require excellent mechanical properties, for example as materials for synthetic fibers, materials for synthetic chemistry, materials for machine industry, materials for construction machinery, materials for marine and space exploitation, materials for automobiles, materials for use in relation to foods, electrical materials, sporting goods, and materials for acoustic appliances and instruments.

REFERENTIAL EXAMPLE

Silicon carbide fibers obtained only from polycarbosilane as used in Comparative Examples were produced as follows.

Polyborosiloxane (3 parts by weight) was added to 100 parts by weight of polydimethylsilane synthesized by dechlorinating and condensing dimethyldichlorosilane with metallic sodium, and the mixture was subjected to condensation at 350°C in nitrogen to obtain polycarbosilane having a main-chain skeleton composed mainly of carbosilane units of the formula $\leftarrow Si-CH_2 \rightarrow$ in which the silicon atoms

had hydrogen atoms and methyl groups. The polymer was melt-spun. The resulting fibers were rendered infusible in air at 190°C, and subsequently calcined at 1300°C in nitrogen to give silicon carbide fibers composed mainly of silicon, carbon and oxygen and having a fiber diameter of 13 microns, a tensile strength of 300 $kg/mm^2$ and a tensile modulus of 16 $tons/mm^2$.

Examples

The following examples illustrate the present invention.

Production of inorganic fibers (I)

Titanium alkoxide was added to polycarbosilane produced by adding 3 parts by weight of polyborosiloxane to 100 parts by weight of polydimethylsilane synthesized by dechlorinating and condensing dimethyldichlorosilane with metallic sodium and subjecting the mixture to condensation at 350°C in nitrogen and having a main-chain skeleton composed mainly of carbosilane units of the formula $\{Si-CH_2\}$ in which the silicon atoms had hydrogen atoms and methyl groups. The mixture was crosslinked and polymerized at 340°C in nitrogen to obtain polytitanocarbosilane composed of 100 parts of carbosilane units and 10 parts of titanoxane units of the formula $\{Ti-O\}$. The polymer was melt-spun. The resulting fibers were rendered infusible at 190°C in air, and subsequently calcined at 1300°C in nitrogen to give inorganic fibers (I) containing mainly silicon, titanium (3% by weight), carbon and oxygen and having a fiber diameter of 13 microns, a tensile strength of 310 $kg/mm^2$ and a tensile modulus of 16 $tons/mm^2$. The resulting fibers were a mixture of an amorphous material composed of Si, Ti, C and O, ultrafine crystalline particles having a particle diameter of about 50 Å of beta-SiC, TiC, a solid solution of beta-SiC and TiC and $TiC_{1-x}$ $(0<x<1)$, and amorphous $SiO_2$ and $TiO_2$.

Production of inorganic fibers (II)

Tetrakisacetylacetonato zirconium was added to

the polycarbosilane obtained as above, and the mixture was crosslinked and polymerized at 350°C in nitrogen to give polyzirconocarbosilane composed of 100 parts of carbosilane units and 30 parts of zirconoxane units of the formula $\leftarrow Zr-O \rightarrow$. The polymer was dissolved in benzene, and the solution was dry-spun. The fibers were rendered infusible at 170°C in air, and subsequently calcined at 1200°C in nitrogen to give amorphous inorganic fibers (II) containing mainly silicon, zirconium (4.5% by weight), carbon and oxygen and having a fiber diameter of 10 microns, a tensile strength of 350 kg/mm$^2$ and a tensile modulus of 18 tons/mm$^2$.

## EXAMPLE 1

The inorganic fibers (I) without surface treatment were aligned monoaxially in sheet form, and impregnated with a commercial bisphenol A-type epoxy resin. The epoxy resin was pre-cured to obtain prepreg sheets having a thickness of 0.15 mm. The prepregs were stacked, and hot pressed at 170°C and 7 kg/cm$^2$ for 4 hours to produce an inorganic fiber-reinforced epoxy composite material having a thickness of 2 mm and composed mainly of silicon, titanium, carbon and oxygen. The composite material contained 60% by volume of the fibers. The mechanical properties of the resulting composite material were as follows:-

Tensile strength (kg/mm$^2$): 190
Tensile modulus (tons/mm$^2$): 16
Flexural strength (kg/mm$^2$): 221
Flexural modulus (tons/mm$^2$): 15
Tensile strength (kg/mm$^2$) in the perpendicular direction: 10.3
Tensile modulus (tons/mm$^2$) in the perpendicular direction: 2.3
Flexural strength (kg/mm$^2$) in the perpendicular direction: 12.4
Flexural modulus (tons/mm$^2$) in the perpendicular direction: 2.2

Interlayer shear strength ($kg/mm^2$): 12.5

Flexural impact value ($kg\text{-}cm/cm^2$): 280

COMPARATIVE EXAMPLE 1

A silicon carbide fiber-reinforced epoxy composite material was produced in the same way as in Example 1 except that the silicon carbide fibers obtained from only polycarbosilane synthesized in Referential Example were used instead of the inorganic fibers (I). The composite material contained 60% by volume of the fibers and had the following mechanical properties.

Tensile strength ($kg/mm^2$): 160

Tensile modulus ($tons/mm^2$): 14

Flexural strength ($kg/mm^2$): 218

Flexural modulus ($tons/mm^2$): 13.5

Tensile strength ($kg/mm^2$) in the perpendicular direction: 6.5

Tensile modulus ($tons/mm^2$) in the perpendicular direction: 1.7

Flexural strength ($kg/mm^2$) in the perpendicular direction: 9.1

Flexural modulus ($tons/mm^2$) in the perpendicular direction: 1.7

Interlayer shear strength ($kg/mm^2$): 8.7

Flexural impact value ($kg\text{-}cm/cm^2$): 260

COMPARATIVE EXAMPLE 2

A carbon fiber-reinforced epoxy composite material was produced in the same way as in Example 1 except that surface-treated high-tenacity polyacrylonitrile-type carbon fibers were used instead of the inorganic fibers (I). The composite material contained 60% by volume of the fibers and had the following mechanical properties.

Tensile strength ($kg/mm^2$): 172

Tensile modulus ($tons/mm^2$): 14

Flexural strength ($kg/mm^2$): 170

Flexural modulus ($tons/mm^2$): 13

Tensile strength ($kg/mm^2$) in the perpendicular direction: 4.5

Tensile modulus ($tons/mm^2$) in the perpendicular direction: 0.88

Flexural strength ($kg/mm^2$) in the perpendicular direction: 6.2

Flexural modulus ($tons/mm^2$) in the perpendicular direction: 0.87

Interlayer shear strength ($kg/mm^2$): 8.1

Flexural impact value ($kg\text{-}cm/cm^2$): 150

The mechanical properties of the epoxy composite materials obtained in Example 1 and Comparative Examples 1 and 2 are summarized in Table 1. It is seen from Table 1 that the inorganic fiber-reinforced composite materials of this invention are better than the other reinforced composite materials.

Table 1

| Properties | Example 1 (invention) | Comparative Example 1 (silicon carbide fibers) | Comparative Example 2 (carbon fibers) |
|---|---|---|---|
| Tensile strength ($kg/mm^2$) in the perpendicular direction | 10.3 | 6.5 | 4.5 |
| Tensile modulus ($tons/mm^2$) in the perpendicular direction | 2.3 | 1.7 | 0.88 |
| Flexural strength ($kg/mm^2$) in the perpendicular direction | 12.4 | 9.1 | 6.2 |
| Flexural modulus ($tons/mm^2$) in the perpendicular direction | 2.2 | 1.7 | 0.87 |
| Interlayer shear strength ($kg/mm^2$) | 12.5 | 8.7 | 8.1 |
| Flexural impact value ($kg\text{-}cm/cm^2$) | 280 | 260 | 150 |

## EXAMPLE 2

The inorganic fibers (I) without surface treatment were aligned monoaxially in sheet form, and impregnated with a commercial phenol-novolak type modified epoxy resin. The epoxy resin was pre-cured to obtain prepreg sheets having a thickness of 0.15 mm. The prepregs were stacked, and hot pressed at 170°C and 7 $kg/cm^2$ for 4 hours to produce an inorganic fiber-reinforced epoxy composite material having a thickness of 2 mm and composed mainly of silicon, titanium, carbon and oxygen. The composite material contained 60% by volume of the fibers. The mechanical properties of the resulting composite material were as follows:-

Tensile strength ($kg/mm^2$): 195
Tensile modulus ($tons/mm^2$): 16.3
Flexural strength ($kg/mm^2$): 236
Flexural modulus ($tons/mm^2$): 15.2
Tensile strength ($kg/mm^2$) in the perpendicular direction: 13.2
Tensile modulus ($tons/mm^2$) in the perpendicular direction: 2.8
Flexural strength ($kg/mm^2$) in the perpendicular direction: 15.6
Flexural modulus ($tons/mm^2$) in the perpendicular direction: 2.7
Interlayer shear strength ($kg/mm^2$): 17.3
Flexural impact value ($kg\text{-}cm/cm^2$): 285

## COMPARATIVE EXAMPLE 3

A silicon carbide fiber-reinforced epoxy composite material was produced in the same way as in Example 2 except that the silicon carbide fibers obtained from only polycarbosilane synthesized used in Comparative Example 1 were used instead of the inorganic fibers (I). The composite material contained 60% by volume of the fibers and had the following mechanical properties.

Tensile strength ($kg/mm^2$): 165
Tensile modulus ($tons/mm^2$): 14.3

Flexural strength ($kg/mm^2$): 228

Flexural modulus ($tons/mm^2$): 13.6

Tensile strength ($kg/mm^2$) in the perpendicular direction: 9.7

Tensile modulus ($tons/mm^2$) in the perpendicular direction: 2.3

Flexural strength ($kg/mm^2$) in the perpendicular direction: 12.0

Flexural modulus ($tons/mm^2$) in the perpendicular direction: 2.3

Interlayer shear strength ($kg/mm^2$): 13.7

Flexural impact value ($kg\text{-}cm/cm^2$): 269

COMPARATIVE EXAMPLE 4

A carbon fiber-reinforced epoxy composite material was produced in the same way as in Example 2 except that surface-treated high-tenacity polyacrylonitrile-type carbon fibers used in Comparative Example 2 were used instead of the inorganic fibers (I). The composite material contained 60% by volume of the fibers and had the following mechanical properties.

Tensile strength ($kg/mm^2$): 178

Tensile modulus ($tons/mm^2$): 14.5

Flexural strength ($kg/mm^2$): 190

Flexural modulus ($tons/mm^2$): 13.3

Tensile strength ($kg/mm^2$) in the perpendicular direction: 7.1

Tensile modulus ($tons/mm^2$) in the perpendicular direction: 1.4

Flexural strength ($kg/mm^2$) in the perpendicular direction: 9.3

Flexural modulus ($tons/mm^2$) in the perpendicular direction: 1.3

Interlayer shear strength ($kg/mm^2$): 13.2

Flexural impact value ($kg\text{-}cm/cm^2$): 160

The mechanical properties of the epoxy composite materials obtained in Example 2 and Comparative Examples 3 and 4 are summarized in Table 2. It is seen from Table 2 that the inorganic fiber-reinforced composite materials of this invention are better than the other reinforced composite materials.

Table 2

| Properties | Example 2 (invention) | Comparative Example 3 (silicon carbide fibers) | Comparative Example 4 (carbon fibers) |
|---|---|---|---|
| Tensile strength ($kg/mm^2$) in the perpendicular direction | 13.2 | 9.7 | 7.1 |
| Tensile modulus ($tons/mm^2$) in the perpendicular direction | 2.8 | 2.3 | 1.4 |
| Flexural strength ($kg/mm^2$) in the perpendicular direction | 15.6 | 12.0 | 9.3 |
| Flexural modulus ($tons/mm^2$) in the perpendicular direction | 2.7 | 2.3 | 1.3 |
| Interlayer shear strength ($kg/mm^2$) | 17.3 | 13.7 | 13.2 |
| Flexural impact value ($kg\text{-}cm/cm^2$) | 285 | 269 | 160 |

EXAMPLE 3

The inorganic fibers (II) were aligned monoaxially in sheet form and impregnated with the same epoxy resin as used in Example 1. The epoxy resin was pre-cured to obtain prepreg sheets. The prepregs were stacked, and then compressed under heat and pressure in an autoclave to produce an inorganic fiber-reinforced epoxy composite material. The composite material obtained contained 58% by volume of the fibers and had the following mechanical properties.

Tensile strength ($kg/mm^2$): 206
Tensile modulus ($tons/mm^2$): 18
Flexural strength ($kg/mm^2$): 239
Flexural modulus ($tons/mm^2$): 16.8
Tensile strength ($kg/mm^2$) in the perpendicular direction: 10.8
Tensile modulus ($tons/mm^2$) in the perpendicular direction: 2.5
Flexural strength ($kg/mm^2$) in the perpendicular direction: 12.7
Flexural modulus ($tons/mm^2$) in the perpendicular direction: 2.3
Interlayer shear strength ($kg/mm^2$): 13.2
Flexural impact value ($kg\text{-}cm/cm^2$): 290

EXAMPLE 4

An inorganic fiber-reinforced epoxy composite material was produced in the same way as in Example 1 except that the inorganic fibers (I) were not aligned in sheet form but were woven into a fabric of plain weave (6 warps and 6 wefts per cm; one yarn consisting of 500 fibers). The resulting composite material contained 62% by weight of the fibers, and had the following mechanical properties.

Tensile strength ($kg/mm^2$): 103
Tensile modulus ($tons/mm^2$): 10.3
Flexural strength ($kg/mm^2$): 119
Flexural modulus ($tons/mm^2$): 10.1

Interlayer shear strength ($kg/mm^2$): 12.9

Flexural impact value ($kg\text{-}cm/cm^2$): 275

EXAMPLE 5

The inorganic fibers (I) without surface-treatment were aligned monoaxially in sheet form and impregnated with a commercial unsaturated polyester resin. The polyester resin was pre-cured to obtain prepreg sheets having a thickness of 0.15 mm. The prepregs were stacked, and hot pressed at 170°C and 7 $kg/cm^2$ for 4 hours to produce an inorganic fiber-reinforced polyester composite material having a thickness of 2 mm. The composite material contained 58% by volume of the fibers, and had the following mechanical properties.

Tensile strength ($kg/mm^2$): 185

Tensile modulus ($tons/mm^2$): 15.6

Flexural strength ($kg/mm^2$): 213

Flexural modulus ($tons/mm^2$): 14.7

Tensile strength ($kg/mm^2$) in the perpendicular direction: 10.2

Tensile modulus ($tons/mm^2$) in the perpendicular direction: 2.2

Flexural strength ($kg/mm^2$) in the perpendicular direction: 12.1

Flexural modulus ($tons/mm^2$) in the perpendicular direction: 2.1

Interlayer shear strength ($kg/mm^2$): 12.3

Flexural impact value ($kg\text{-}cm/cm^2$): 268

COMPARATIVE EXAMPLE 5

A silicon carbide fiber-reinforced polyester composite material was produced in the same way as in Example 5 except that the silicon carbide fibers obtained only from polycarbosilane prepared in Referential Example were used instead of the inorganic fibers (I). The composite material contained 58% by weight of the fibers and had the following mechanical properties.

Tensile strength ($kg/mm^2$): 153

Tensile modulus ($tons/mm^2$): 13.9

Flexural strength ($kg/mm^2$): 203

Flexural modulus ($tons/mm^2$): 12.9

Tensile strength ($kg/mm^2$) in the perpendicular direction: 6.1

Tensile modulus ($tons/mm^2$) in the perpendicular direction: 1.3

Flexural strength ($kg/mm^2$) in the perpendicular direction: 8.8

Flexural modulus ($tons/mm^2$) in the perpendicular direction: 1.5

Interlayer shear strength ($kg/mm^2$): 8.6

Flexural impact value ($kg\text{-}cm/cm^2$): 256

## COMPARATIVE EXAMPLE 6

A carbon fiber-reinforced composite material was produced in the same way as in Example 5 except that the surface-treated carbon fibers used in Comparative Example 2 were used instead of the inorganic fibers (I) used in this invention. The composite material contained 58% by volume of the fibers and had the following mechanical properties.

Tensile strength ($kg/mm^2$): 170

Tensile modulus ($tons/mm^2$): 13.8

Flexural strength ($kg/mm^2$): 166

Flexural modulus ($tons/mm^2$): 12.2

Tensile strength ($kg/mm^2$) in the perpendicular direction: 4.5

Tensile modulus ($tons/mm^2$) in the perpendicular direction: 0.7

Flexural strength ($kg/mm^2$) in the perpendicular direction: 5.9

Flexural modulus ($tons/mm^2$) in the perpendicular direction: 0.8

Interlayer shear strength ($kg/mm^2$): 8.0

Flexural impact value ($kg\text{-}cm/cm^2$): 140

The mechanical properties of the polyester composite materials obtained in Example 5 and Comparative Examples 5 and 6 are summarized in Table 3. It is seen from Table 3 that the inorganic fiber-reinforced composite materials of this invention are better than the other reinforced composite materials.

Table 3

| Properties | Example 5 (invention) | Comparative Example 5 (silicon carbide fibers) | Comparative Example 6 (carbon fibers) |
|---|---|---|---|
| Tensile strength ($kg/mm^2$) in the perpendicular direction | 10.2 | 6.1 | 4.5 |
| Tensile modulus ($tons/mm^2$) in the perpendicular direction | 2.2 | 1.3 | 0.7 |
| Flexural strength ($kg/mm^2$) in the perpendicular direction | 12.1 | 8.8 | 5.9 |
| Flexural modulus ($tons/mm^2$) in the perpendicular direction | 2.1 | 1.5 | 0.8 |
| Interlayer shear strength ($kg/mm^2$) | 12.3 | 8.6 | 8.0 |
| Flexural impact value ($kg\text{-}cm/cm^2$) | 268 | 256 | 140 |

EXAMPLE 6

The inorganic fibers (I) without surface-treatment were aligned monoaxially in sheet form, and impregnated with a polyimide resin (produced by Ube Industries, Ltd.). The polyimide resin was pre-cured to form prepreg sheets having a thickness of 0.15 mm. The prepregs were stacked and hot-pressed at 170°C and 7 kg/cm$^2$ for 4 hours to produce an inorganic fiber-reinforced polyimide composite material having a thickness of 2 mm. The composite material contained 60% by volume of the fibers, and had the following mechanical properties.

Tensile strength (kg/mm$^2$): 195
Tensile modulus (tons/mm$^2$): 16.1
Flexural strength (kg/mm$^2$): 215
Flexural modulus (tons/mm$^2$): 14.7
Tensile strength (kg/mm$^2$) in the perpendicular direction: 10.3
Tensile modulus (tons/mm$^2$) in the perpendicular direction: 2.2
Flexural strength (kg/mm$^2$) in the perpendicular direction: 12.3
Flexural modulus (tons/mm$^2$) in the perpendicular direction: 2.1
Interlayer shear strength (kg/mm$^2$): 12.6
Flexural impact value (kg-cm/cm$^2$): 270

COMPARATIVE EXAMPLE 7

A silicon carbide-reinforced polyimide composite material was produced in the same way as Example 6 except that the silicon carbide fibers obtained only from the polycarbosilane used in Comparative Example 1 were used instead of the inorganic fibers (I). The resulting composite material contained 60% by volume of the fibers and had the following mechanical properties.

Tensile strength (kg/mm$^2$): 153
Tensile modulus (tons/mm$^2$): 13.7
Flexural strength (kg/mm$^2$): 202
Flexural modulus (tons/mm$^2$): 13.1

Tensile strength ($kg/mm^2$) in the perpendicular direction: 6.2

Tensile modulus ($tons/mm^2$) in the perpendicular direction: 1.5

Flexural strength ($kg/mm^2$) in the perpendicular direction: 9.0

Flexural modulus ($tons/mm^2$) in the perpendicular direction: 1.7

Interlayer shear strength ($kg/mm^2$): 8.6

Flexural impact value ($kg\text{-}cm/cm^2$): 255

COMPARATIVE EXAMPLE 8

A carbon fiber-reinforced polyimide composite material was produced in the same way as in Example 6 except that the surface-treated carbon fibers used in Comparative Example 2 were used instead of the inorganic fibers (I). The resulting composite material contained 60% by volume of the fibers and had the following mechanical properties.

Tensile strength ($kg/mm^2$): 173

Tensile modulus ($tons/mm^2$): 14

Flexural strength ($kg/mm^2$): 168

Flexural modulus ($tons/mm^2$): 13.1

Tensile strength ($kg/mm^2$) in the perpendicular direction: 4.5

Tensile modulus ($tons/mm^2$) in the perpendicular direction: 0.9

Flexural strength ($kg/mm^2$) in the perpendicular direction: 6.0

Flexural modulus ($tons/mm^2$) in the perpendicular direction: 0.9

Interlayer shear strength ($kg/mm^2$): 7.8

Flexural impact value ($kg\text{-}cm/cm^2$): 143

The mechanical properties of the epoxy composite materials obtained in Example 8 and Comparative Examples 7 and 8 are summarized in Table 4. It is seen from Table 4 that the inorganic fiber-reinforced composite materials of this invention are better than the other reinforced composite materials.

Table 4

| Properties | Example 6 (invention) | Comparative Example 7 (silicon carbide fibers) | Comparative Example 8 (carbon fibers) |
|---|---|---|---|
| Tensile strength ($kg/mm^2$) in the perpendicular direction | 10.3 | 6.2 | 4.5 |
| Tensile modulus ($tons/mm^2$) in the perpendicular direction | 2.2 | 1.5 | 0.9 |
| Flexural strength ($kg/mm^2$) in the perpendicular direction | 12.3 | 9.0 | 6.0 |
| Flexural modulus ($tons/mm^2$) in the perpendicular direction | 2.1 | 1.7 | 0.9 |
| Interlayer shear strength ($kg/mm^2$) | 12.6 | 8.6 | 7.8 |
| Flexural impact value ($kg\text{-}cm/cm^2$) | 270 | 255 | 143 |

EXAMPLE 7

The inorganic fibers (II) were aligned monoaxially in sheet form, and impregnated with the same polyimide resin as used in Example 6. The resin was pre-cured to obtain prepreg sheets. The prepregs were stacked, and heated under pressure by an autoclave to produce an inorganic fiber-reinforced polyamide composite material. The composite material contained 57% by volume of the fibers, and had the following mechanical properties.

Tensile strength ($kg/mm^2$): 200
Tensile modulus ($tons/mm^2$): 17.2
Flexural strength ($kg/mm^2$): 218
Flexural modulus ($tons/mm^2$): 16.5
Tensile strength ($kg/mm^2$) in the perpendicular direction: 10.7
Tensile modulus ($tons/mm^2$) in the perpendicular direction: 2.4
Flexural strength ($kg/mm^2$) in the perpendicular direction: 12.6
Flexural modulus ($tons/mm^2$) in the perpendicular direction: 2.2
Interlayer shear strength ($kg/mm^2$): 13.1
Flexural impact value ($kg\text{-}cm/cm^2$): 278

EXAMPLE 8

An inorganic fiber-reinforced epoxy composite material was produced in the same way as in Example 1 except that instead of aligning the inorganic fibers (I) in sheet form, the inorganic fibers (I) were woven three dimensionally, and used as the reinforcing material. The resulting composite material contained 60% by volume of the fibers and had the following mechanical properties.

TEnsile stfrength ($kg/mm^2$): 97
Tensile modulus S($tons/mm^2$): 10.1
Flexural strength ($kg/mm^2$): 107
Flexural modulus ($tons/mm^2$): 9.5
Interlayer shear strength ($kg/mm^2$): 10.2
Flexural impact value ($kg/cm^2$): 270

CLAIMS

1. An inorganic fiber-reinforced plastic composite material comprising a plastics matrix and from 10 to 70% by volume of the composite material of inorganic fibers as a reinforcing material, said inorganic fibers containing silicon, either titanium or zirconium, carbon and oxygen and being composed of

(1) an amorphous material consisting substantially of Si, M, C and O, in which M represents Ti or Zr;
(2) an aggregate consisting substantially of ultrafine crystalline particles of beta-SiC, MC, a solid solution of beta-SiC and MC and $MC_{1-x}$ having a particle diameter of not more than 400 Å, and amorphous $SiO_2$ and $MO_2$, in which M is as defined above and x is a number represented by $0<x<1$; or
(3) a mixture of the amorphous material (1) and the aggregate (2).

2. A composite material according to claim 1 wherein the plastics matrix is an epoxy resin, modified epoxy resin, polyester resin, polyimide resin, phenolic resin, polyurethane resin, polyamide resin, polycarbonate resin, silicone resin, phenoxy resin, polyphenylene sulfide, fluorine resin, hydrocarbon resin, halogen-containing resin, acrylic resin or acrylonitrile-butadiene-styrene resin.

3. A composite material according to claim 1 or 2 wherein the inorganic fibers have an elemental composition consisting of 30 to 60% by weight of Si, 0.5 to 35% by weight of Ti or Zr, 25 to 40% by weight of C and 0.01 to 30% by weight of O.

4. Shaped articles composed of a composite material as claimed in any one of the preceding claims.